# EUROPEAN PATENT APPLICATION

(11) **EP 3 650 692 A1**
(43) Date of publication of application: **13.05.2020**
(21) Application number: 17909614.4
(22) Date of filing: 10.08.2017
(51) Int. Cl.: F03G 7/10, F16D 31/02

(54) **MOTOR PROVIDING MECHANICAL IMPULSES BY COMPRESSED AIR COMPRESSION**

(30) Priority: 11.05.2017 PA 9162801
(71) Applicant: Vergara Alarcón, Demóstenes Jesús, Casa 33 (PA)
(72) Inventor: Vergara Alarcón, Demóstenes Jesús, Casa 33 (PA)
(74) Representative: ZBM Patents - Zea, Barlocci & Markvardsen
(86) International application number: PCT/PA2017/000001
(87) International publication number: WO 2018/208178

(57) **Abstract**

The invention relates to a motor providing mechanical impulses by compressed air compression. The motor is driven by a compressor powered by a 3000 W inverter, which sends compressed air that flows into the pistons, producing a force advantage to the load of the lever arms, coupled together, which are coupled to the main shaft, thus ensuring continuous rotation.

## Description

### DETAILED DESCRIPTION

The rotation of a central shaft is caused by two ratchets, two lever arms of 1 meter, each arm being driven by a pneumatic piston which displaced to 30 mm.

It is powered by a 1 HP compressor. The ratchets, as they are driven by the pistons, move the shaft of 60 mm, which has coupled thereto a pulley of 24 inches; in its final portion it is connected to a set of pulleys, until it reaches 1800 rpm.

An alternator is connected to one of the pulleys, and the alternator charges a battery.

The battery is connected to an inverter from 12 V to 110, which in turn provides energy to the air compressor, which feeds the pneumatic pistons with 140 psi, causing rotation of this shaft of 60 mm and ensuring continuity of its permanent rotation. The shaft may be coupled through its sets of pulleys to any generator, water pump or compressor, without the need to use any kind of fuel such as gas, diesel, petrol, sun, water, wind, etc.

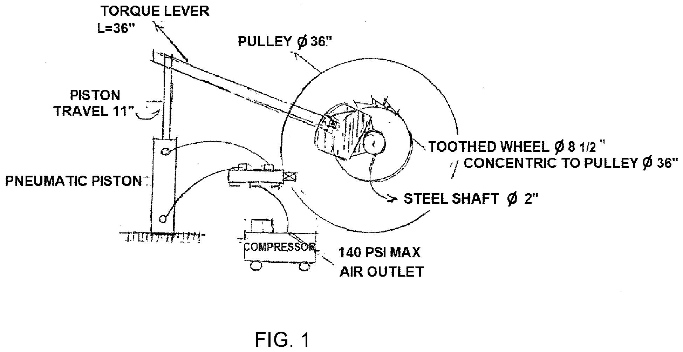

## Claims

1. Mechanical impulse motor **characterized in that** it comprises two (2) pneumatic pistons.

2. Mechanical impulse motor **characterized in that** it comprises two (2) levers of one (1) meter.

3. Mechanical impulse motor **characterized in that** it comprises a compressor of 1 HP.

4. Mechanical impulse motor **characterized in that** it comprises: one (1) inverter of 12 V BC and 3000 W, which drives an alternator to recharge a battery, and in the continuity of the pulleys - connected to a generator which produces clean energy.
